(19) Europäisches Patentamt
European Patent Office
Office européen des brevets

(11) **EP 1 695 485 B1**

(12) **FASCICULE DE BREVET EUROPEEN**

(45) Date de publication et mention
de la délivrance du brevet:
**28.03.2007  Bulletin 2007/13**

(21) Numéro de dépôt: **04816391.9**

(22) Date de dépôt: **16.12.2004**

(51) Int Cl.:
*H04L 12/24* (2006.01)     *H04L 29/06* (2006.01)

(86) Numéro de dépôt international:
**PCT/FR2004/003251**

(87) Numéro de publication internationale:
**WO 2005/060160 (30.06.2005 Gazette 2005/26)**

(54) **PROCEDE DE CLASSIFICATION AUTOMATIQUE D UN ENSEMBLE D A     LERTES ISSUES DE SONDES DE DETECTION D INTRUSIONS D UN     SYSTEME DE SECURITE D INFORMATION**

VERFAHREN ZUR AUTOMATISCHEN KLASSIFIZIERUNG VON EINEM EINBRUCHMELDESENSOR ERZEUGTEN ALARMMELDUNGEN IN EINEM SICHERHEITSINFORMATIONSSYSTEM

METHOD FOR AUTOMATICALLY CLASSIFYING A SET OF ALARMS EMITTED BY SENSORS FOR DETECTING INTRUSIONS OF A INFORMATION SECURITY SYSTEM

(84) Etats contractants désignés:
**AT BE BG CH CY CZ DE DK EE ES FI FR GB GR
HU IE IS IT LI LT LU MC NL PL PT RO SE SI SK TR**

(30) Priorité:  **17.12.2003  FR 0314782**

(43) Date de publication de la demande:
**30.08.2006   Bulletin 2006/35**

(73) Titulaire: **FRANCE TELECOM
75015 Paris (FR)**

(72) Inventeurs:
• **MORIN, Benjamin
F-35000 Rennes (FR)**

• **DEBAR, Hervé
F-14111 Louvigny (FR)**
• **TOMBINI, Elvis
F-14000 Caen (FR)**

(74) Mandataire: **Joly, Jean-Jacques et al
Cabinet Beau de Loménie
158, rue de l'Université
75340 Paris Cedex 07 (FR)**

(56) Documents cités:
**EP-A- 0 985 995        WO-A-01/84285
WO-A-03/036914        US-B1- 6 446 058**

**Description**

Arrière-plan de l'invention

L'invention concerne un procédé de classification automatique d'un ensemble d'alertes issues de sondes de détection d'intrusions.

La sécurité des systèmes d'information passe par le déploiement de systèmes de détection d'intrusions « IDS » comportant des sondes de détection d'intrusions qui émettent des alertes vers des systèmes de gestion d'alertes.

En effet, les sondes de détection d'intrusions sont des composants actifs du système de détection d'intrusions qui analysent une ou plusieurs sources de données à la recherche d'événements caractéristiques d'une activité intrusive et émettent des alertes vers les systèmes de gestion d'alertes. Un système de gestion des alertes centralise les alertes provenant des sondes et effectue éventuellement une analyse de l'ensemble de ces alertes.

Les sondes de détection d'intrusions génèrent un très grand nombre d'alertes qui peut comprendre plusieurs milliers par jour en fonction des configurations et de l'environnement.

L'excès d'alertes peut résulter d'une combinaison de plusieurs phénomènes. Tout d'abord, des fausses alertes représentent jusqu'à 90% du nombre total d'alertes. Ensuite, les alertes sont souvent trop granulaires, c'est-à-dire que leur contenu sémantique est très pauvre. Enfin les alertes sont souvent redondantes et récurrentes.

Le traitement amont des alertes au niveau du système de gestion est donc nécessaire pour faciliter le travail d'analyse d'un opérateur de sécurité. Ce traitement consiste à corréler les alertes, c'est à dire à réduire la quantité globale des alertes, tout en améliorant leur sémantique. Ceci peut être fait par une classification non supervisée des alertes.

L'objectif de la classification non supervisée est de découper l'espace des alertes en plusieurs classes en tenant compte des variables qui les caractérisent.

Dans le présent domaine d'application, les alertes qui font l'objet de la classification sont décrites par des variables essentiellement qualitatives et structurées.

Les variables qualitatives et structurées sont des variables appartenant à des domaines discrets dont chacun est muni d'un ordre partiel.

Les méthodes de classification des variables qualitatives structurées sont dites des classifications conceptuelles.

Une méthode de classification conceptuelle est proposée par R.S. Michalsky et R.E. Stepp, dans une publication intitulée "Learning from Observation: Conceptual Clustering", dans le journal "In Machine Learning: An, Artificial Intelligence Approach", publié en 1993.

Cette méthode construit de manière descendante une hiérarchie conceptuelle à partir d'un ensemble de données, en déterminant une partition d'un ensemble complet de données en plusieurs classes disjointes.

L'approche utilisée dans cette méthode de Michalsky est donc inadaptée à la classification des alertes, puisqu'elle partitionne l'ensemble des données et est incapable d'intégrer une nouvelle donnée sans avoir à être réinitialisée.

En effet, les bases de données des alertes sont fortement dynamiques car il peut y avoir plusieurs nouvelles alertes par seconde.

Une autre méthode de classification conceptuelle est proposée par D.H. Fisher, dans une publication d'une thèse de doctorat, intitulée "Knowledge Acquisition via Incremental Conceptual Clustering", au «Department of Information and Computer Science, University of California », publiée en 1987.

La méthode de Fisher est une classification conceptuelle incrémentale, qui ne nécessite pas une connaissance préalable du nombre de classes souhaitées. En revanche, cette méthode est utilisée pour des variables nominales.

D'autres méthodes dérivées de la méthode de Fisher prennent en charge des données structurées. La structure de la hiérarchie obtenue par ces méthodes est fortement dépendante de l'ordre d'insertion des données. De plus, l'approche de Fisher produit une partition de l'ensemble des données.

Par ailleurs, Manganaris *et al,* dans une publication au « 2nd International Workshop on Recent Advances in Intrusion Detection 1999», intitulée "A Data Mining Analysis of RTID Alarms", proposent de modéliser un comportement toléré d'un système d'information à l'aide des alertes fournies par les outils de détection d'intrusions. L'utilisation des systèmes de détection d'intrusions « IDS » en milieu opérationnel montre en effet que les alertes les moins fréquentes sont généralement les plus suspectes.

Selon ce modèle, les alertes récurrentes sont considérées comme étant soit des fausses alertes dues au comportement normal d'entités du système d'information, mais qui semble intrusif du point de vue des systèmes IDS, soit des défaillances des entités.

Une autre méthode de classification d'alertes est proposée par K. Julisch, dans une publication de « Proceedings of the 17th ACSAC » en 2001, intitulée "Mining Alarm Clusters to Improve Alarm Handling Efficiency". Cette méthode propose une généralisation des alertes pour mettre en évidence des groupes d'alertes plus pertinents que chaque alerte prise individuellement.

La méthode utilisée par Julisch est une modification d'une autre méthode connue proposée par Han et al, publiée dans « Advances in Knowledge Discovery and Data Mining, AAAI Press » en 1996 sous le titre "Exploration of the Power of Attribute-Oriented Induction in Data-Mining". /*Mit Press,* 1996.

Sommairement, la méthode utilisée par Han consiste à généraliser des variables structurées. Le domaine de chaque variable possède un ordre partiel représenté par une hiérarchie arborescente, dont le niveau d'abstraction ou généralisation va croissant des feuilles au sommet de la hiérarchie.

La méthode de Hall est itérative. Chaque itération consiste à choisir un attribut et à généraliser la valeur de l'attribut de chaque individu, en fonction de la hiérarchie qui lui est associée. Les variables qui deviennent égales, suite à une généralisation, sont fusionnées. Le nombre global de variables décroît donc à chaque itération. Le processus s'arrête lorsque le nombre de variables devient inférieur à un seuil donné.

Ce critère d'arrêt n'est pas satisfaisant car on ne peut pas savoir à priori combien de groupes d'alertes il est souhaitable de présenter à l'opérateur de sécurité. De plus, les alertes généralisées obtenues risquent d'être sur-généralisées et leur intérêt limité. La difficulté de l'approche consiste donc à trouver un bon compromis entre une réduction importante du nombre d'alertes et le maintien de leur pertinence.

Alors, la modification apportée par Julisch consiste à retirer de l'ensemble d'alertes soumises au processus de généralisation toute alerte généralisée dont le nombre d'instances d'alertes sous-jacentes dépasse un seuil donné.

Afin d'éviter le phénomène de sur-généralisation, la généralisation effectuée sur les alertes généralisées restantes est annulée, et le processus est réitéré avec un autre attribut.

L'inconvénient de cette méthode est qu'elle ne permet pas d'identifier des généralisations pertinentes qui auraient pu se présenter si les alertes fournies à l'opérateur de sécurité avaient été conservées pour les généralisations suivantes. De plus, la nature des alertes généralisées obtenues dépend de l'ordre des attributs qui est basé sur des heuristiques.

Enfin, la méthode de Julisch n'est pas incrémentale et le processus de généralisation doit être réinitialisé à chaque requête de l'opérateur de sécurité.

Le document EP-A-0985995 (IBM), 15 MARS 2000, divulgue le préambule de la revendication 1.


Objet et résumé de l'invention


L'invention a pour but de remédier à ces inconvénients, et de fournir une méthode simple de classification non supervisée des alertes issues de sondes de détection d'intrusions pour engendrer des alertes synthétiques les plus générales et les plus pertinentes présentant une vision globale de l'ensemble des alertes et de façon entièrement automatique.

Ces buts sont atteints grâce à un procédé de classification automatique d'un ensemble d'alertes issues de sondes de détection d'intrusions d'un système de sécurité d'information pour produire des alertes synthétiques, chaque alerte étant définie par une pluralité d'attributs qualitatifs appartenant à une pluralité de domaines d'attributs dont chacun est muni d'une relation d'ordre partiel, caractérisé en ce qu'il comporte les étapes suivantes :

- organiser les attributs appartenant à chaque domaine d'attribut en une structure hiérarchique comportant plusieurs niveaux définis selon la relation d'ordre partiel du domaine d'attribut, la pluralité de domaines d'attributs formant ainsi plusieurs structures hiérarchiques ;
- construire pour chaque alerte issue des sondes de détection d'intrusions, un treillis propre à cette alerte en généralisant chaque alerte selon chacun de ses attributs et à tous les niveaux de la structure hiérarchique, le treillis propre comportant des noeuds correspondant à des alertes, liés entre eux par des arcs de sorte que chaque noeud est lié à un ou des noeuds parents et/ou un ou des noeuds enfants ou descendants ;
- fusionner de façon itérative dans un treillis général, chacun des treillis propres ;
- identifier dans le treillis général, les alertes synthétiques en sélectionnant les alertes qui sont à la fois les plus pertinentes et les plus générales selon des critères statistiques et selon l'appartenance de leurs attributs à des niveaux inférieurs des structures hiérarchiques; et
- produire les alertes synthétiques à une unité de sortie d'un système de gestion d'alertes afin de présenter une vision globale de l'ensemble des alertes issues des sondes de détection d'intrusions.


Ainsi, la méthode selon l'invention est une méthode incrémentale et fournit des classes d'alertes potentiellement non disjointes.

Selon un premier aspect de l'invention, la construction d'un treillis propre comporte les étapes suivantes :

- récupérer pour tout attribut généralisable d'une alerte donnée, la valeur généralisée de cet attribut à partir de sa structure hiérarchique pour former une nouvelle alerte plus générale que ladite alerte donnée;
- ajouter un nouveau noeud au treillis propre correspondant à la nouvelle alerte et ajouter un arc allant du nouveau noeud de la nouvelle alerte au noeud de l'alerte donnée ;

- ajouter des arcs manquants allant des noeuds parents de l'alerte donnée, issus de la généralisation de l'alerte donnée selon ses autres attributs, au noeud de la nouvelle alerte.

Selon un deuxième aspect de l'invention, la fusion d'un treillis propre donné dans le treillis général comporte les étapes suivantes :

- sélectionner un premier noeud correspondant à une première alerte appartenant au treillis propre donné, et un second noeud correspondant à une seconde alerte appartenant au treillis général ;
- supprimer tous les arcs provenant des noeuds parents d'un noeud enfant du premier noeud si ledit noeud enfant appartient aussi au treillis général,
- ajouter au treillis général ledit noeud enfant et l'ensemble de ses descendants si ledit noeud enfant n'appartient pas au treillis général.

Selon un troisième aspect de l'invention, une alerte pertinente est identifiée lorsque chacun des ensembles des noeuds enfants de l'alerte pertinente issu d'une spécialisation de cette alerte selon chacun de ses domaines d'attributs est homogène, et lorsque le nombre d'éléments composant ledit chacun des ensembles des noeuds enfants de l'alerte pertinente est supérieur à une valeur seuil.

Avantageusement, les alertes synthétiques sont associées à des différents groupes d'alertes issus des sondes de sorte que ces groupes ne sont pas forcément mutuellement exclusifs.

La pluralité des domaines d'attributs peuvent comporter des domaines parmi les ensembles suivants : ensemble des identifiants d'attaques, ensemble des sources d'attaques, ensemble des cibles d'attaques, et ensemble des dates d'attaques.

L'invention vise aussi un programme informatique conçu pour mettre en oeuvre le procédé ci-dessus, lorsqu'il est exécuté par le système de gestion d'alerte.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 est une vue très schématique d'un système de sécurité d'information comportant un système de gestion d'alertes selon l'invention ;
- la figure 2 est un organigramme de formation d'un treillis propre selon l'invention ;
- la figure 2A montre très schématiquement le mécanisme de la figure 2 ;
- la figure 3 est un organigramme de fusion d'un treillis propre dans un treillis général selon l'invention ;
- les figures 3A et 3B montrent très schématiquement le mécanisme de la figure 3 ;
- la figure 4 est un organigramme de sélection des alertes synthétiques selon l'invention ;
- la figure 5 montre de façon très schématique une alerte associée à différentes alertes synthétiques selon l'invention ;
- les figures 6A à 6C montrent très schématiquement des hiérarchies simplifiées associées aux différents domaines d'attributs des alertes selon l'invention ; et
- la figure 7 illustre un treillis général associé à deux alertes généralisées selon les hiérarchies des figures 6A à 6C.

Description détaillée de modes de réalisation

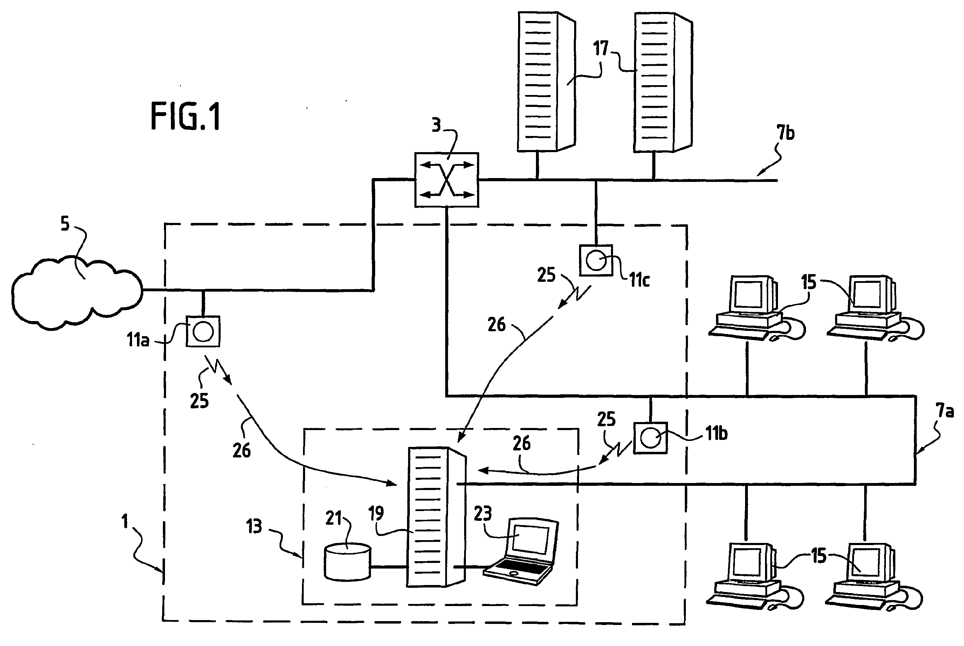

La figure 1 illustre un exemple d'un système de détection d'intrusions 1 relié au travers un routeur 3 à un réseau externe 5 et à un réseau interne 7a et 7b à architecture distribuée.

Le système de détection d'intrusions 1 comporte plusieurs sondes de détection d'intrusions 11a, 11b, 11c, et un système de gestion d'alertes 13. Ainsi, une première sonde 11a de détection d'intrusions surveille les alertes venant de l'extérieur, une deuxième sonde 11b surveille une partie du réseau interne 7a comprenant des stations de travail 15 et un troisième sonde 11c surveille une autre partie du réseau interne 7b comprenant des serveurs 17 délivrant des informations au réseau externe 5.

Le système de gestion d'alerte 13 peut comporter un hôte 19 dédié au traitement des alertes, une base de données 21, et une unité de sortie 23.

Ainsi, les sondes 11a, 11b, 11c déployées dans le système de détection d'intrusions 1 envoient (flèches 26) leurs alertes 25 au système de gestion d'alerte 13. Ce dernier, conformément à l'invention, procède à une classification automatique de cet ensemble d'alertes et envoie des alertes synthétiques à l'unité de sortie 23 afin de présenter une vision globale de l'ensemble des alertes issues des sondes de détection d'intrusions 11a, 11b, 11c.

En effet, l'hôte 19 du système de gestion d'alerte 13 comprend des moyens de traitement pour procéder à la classification automatique des alertes et le stockage de cette classification sous forme de treillis dans la base de données 21.

Ainsi, un programme informatique conçu pour mettre en oeuvre la présente invention peut être exécuté par le système de gestion d'alertes.

Les alertes et d'une manière générale, les données qui peuvent faire l'objet d'une classification conceptuelle sont des n-uplets d'attributs $(a_1,...a_i,...,a_n) \in A_1 \times \cdots \times Ai \times \cdots \times A_n$, $Ai$ étant un ensemble discret muni d'une relation d'ordre partiel $\prec_{Ai}$ définissant le domaine de l'attribut $a_i$.

Les ensembles partiellement ordonnés peuvent être représentés par un diagramme de Hasse, c'est à dire par un graphe acyclique dirigé ou une structure hiérarchique $G=(A_i, cover(\prec_{Ai}))$ dont l'ensemble des noeuds est constitué des éléments de $Ai$ et l'ensemble des arcs est constitué par la couverture de la relation d'ordre partiel.

Dans le présent mode de réalisation, nous restreignons les hiérarchies d'attributs à des arbres équilibrés : chaque valeur d'attribut a au plus un seul parent et la distance des feuilles au sommet de l'arborescence est une constante. Toutefois, la présente invention peut être facilement adaptée à des hiérarchies plus élaborées.

Une structure hiérarchique peut être considérée comme une structure arborescente où l'ancêtre d'un élément $b$ est un élément $a$ tel que $b \prec_{Ai} a$. Dans ce cas on dit que l'élément $a$ est plus abstrait ou plus général que l'élément $b$, et réciproquement, on dit que l'élément $b$ est plus spécifique que l'élément $a$.

En particulier, l'élément $a$ est un ancêtre direct de $b$ si $(a,b) \in cover(\prec_{Ai})$, c'est-à-dire, s'il n'existe pas un élément intermédiaire $g$ entre les éléments $a$ et $b$, ou de façon formelle si $b \prec_{Ai} a$ et $(\nexists\ g/(g \prec_{Ai} a$ et $b \prec_{Ai} g))$.

Les éléments les plus spécifiques d'un domaine d'attribut $Ai$, formant une structure hiérarchique, définissent ce qu'on appelle les feuilles de cette structure hiérarchique. Ainsi, une feuille $f$ est un élément $f \in Ai$ tel que $\nexists\ g \in A_i$ tel que $g \prec_{Ai} f$.

Chaque attribut possède un niveau d'abstraction ou de généralisation, défini par un entier correspondant à la hauteur de l'attribut dans la structure hiérarchique. Le niveau 0 est attribué à la racine de la hiérarchie, c'est-à-dire à l'ensemble d'éléments le plus général. Le niveau d'abstraction ou de généralisation d'un élément quelconque vaut le niveau d'abstraction de son ancêtre direct augmenté de la valeur 1.

Ainsi, chaque alerte peut être définie par une pluralité d'attributs qualitatifs $(a_1,...a_i,...a_n)$ appartenant à une pluralité de domaines d'attributs $(A1,..., Ai,...An)$ dont chacun est muni d'une relation d'ordre partiel.

Les attributs appartenant à chaque domaine d'attribut $Ai$ peuvent donc être organisés en une structure hiérarchique comportant plusieurs niveaux définis selon la relation d'ordre partiel du domaine d'attribut. Alors, la pluralité de domaines d'attributs $(A1,...,Ai,...An)$ forme plusieurs structures hiérarchiques.

D'une manière générale, on parlera de « concept » pour désigner un élément quelconque de $A1 \times ... \times An$. En outre, les concepts non généralisés, c'est-à-dire les concepts dont les attributs n'appartiennent qu'aux feuilles des hiérarchies sont appelés des « individus ». Ainsi, les alertes issues des sondes de détection d'intrusions 11a, 11b, 11c peuvent être considérées comme des individus qui font l'objet de la classification.

L'objectif de la classification selon l'invention est d'identifier des concepts pertinents en effectuant des généralisations successives sur les attributs des individus, en fonction de leur relation d'ordre partiel.

Les concepts à classifier sont structurés dans un treillis $T=(C, R)$ où $R \subseteq C \times C$, et $C$ est l'ensemble des noeuds du treillis correspondant aux concepts. Ainsi, dans un treillis la notion de concept peut être confondue avec celle du noeud.

Il existe un lien $(c_1,c_2) \in R$ du noeud $c_1$ vers le noeud $c_2$ si $c_1$ est issu de l'abstraction ou de la généralisation de $c_2$ selon n'importe quel attribut. On note $\uparrow (c_1)=\{c_2 \in C/(c_2,c_1) \in R\}$ l'ensemble des noeuds parents du noeud $c_1$. De même, on note $\downarrow (c_1)=\{c_2 \in C/(c_1,c_2) \in R\}$ l'ensemble des noeuds enfants de $c_1$.

Le sous-ensemble $\downarrow^{Ai} (c)$ de l'ensemble $\downarrow(c)$ est l'ensemble des noeuds enfants de $c$, issus de la spécialisation de $c$ selon le domaine d'attribut $Ai$.

De même, le sous-ensemble $\uparrow^{Ai} (c)$ de l'ensemble $\uparrow (c)$ est l'ensemble des noeuds parents de $c$, issus de la généralisation de $c$ selon le domaine d'attribut $Ai$.

On notera que la relation $\downarrow^{Ai}$ peut être considérée comme une fonction lorsque la structure hiérarchique est une structure arborescente.

Ainsi, on peut définir une relation d'ordre partiel $\lhd$ sur l'ensemble des concepts de la manière suivante :

$$\ll C \leftrightarrow C : c_1 \lhd c_2 \Leftrightarrow \begin{cases} \exists Ai, c_1[Ai] \prec_{Ai} c_2[Ai] \\ \forall Aj, c_1[Aj] \preceq_{Aj} c_2[Aj] \end{cases},$$

où $c[Ai]$ désigne l'attribut appartenant au domaine d'attribut $Ai$ du concept $c$.

Cette relation d'ordre partiel $\lhd$ permet de construire pour chaque individu $i$, en particulier pour chaque alerte issue des sondes de détection d'intrusions, un treillis propre à cette alerte en généralisant chaque alerte selon chacun de ses attributs et à tous les niveaux de la structure hiérarchique.

Formellement, si $i =(a_1,...,a_n)$ est un individu, le treillis propre $Ti = (Ci, Ri)$ associé à l'individu $i$ est défini de la manière suivante:

$$Ci = \left\{(c_1,...c_n) \in A1 \times ... An / a_j \preceq_{Aj} c_j \right\}$$

$$Ri = \left\{(c_j, c_k) \in Ci \times Ci / \begin{Bmatrix} \exists! Al / (c_j[Al], c_k[Al]) \in \mathrm{cov}er(\prec_{Al}) \\ \forall Am \neq Al, c_j[Am] = c_k[Am] \end{Bmatrix} \right\}$$

Ainsi, un treillis général contenant l'ensemble des concepts peut être construit par ajouts successifs des treillis propres.

L'insertion d'un individu dans le treillis général se fait en fusionnant le treillis propre à l'individu avec le treillis général.

Formellement, étant donné l'ensemble $I$ d'individus, le treillis général $T = (C,R)$ est défini de la manière suivante :

$$C = \bigcup_{i \in I} Ci \quad \text{et} \quad R = \bigcup_{i \in I} Ri$$

Ainsi, un treillis propre peut être construit pour chaque alerte issue des sondes de détection d'intrusions 11a, 11b, 11c. Ce treillis propre comporte donc des noeuds correspondant à des alertes, liés entre eux par des arcs de sorte que chaque noeud est lié à un ou des noeuds parents et/ou un ou des noeuds enfants ou descendants.

Ensuite, chacun des treillis propres associés aux alertes issues des sondes de détection d'intrusions peut être fusionné de façon itérative dans le treillis général.

Finalement, des alertes synthétiques peuvent être identifiées dans le treillis général, en sélectionnant les alertes qui sont à la fois les plus pertinentes et les plus générales selon des critères statistiques et selon l'appartenance de leurs attributs à des niveaux inférieurs des structures hiérarchiques.

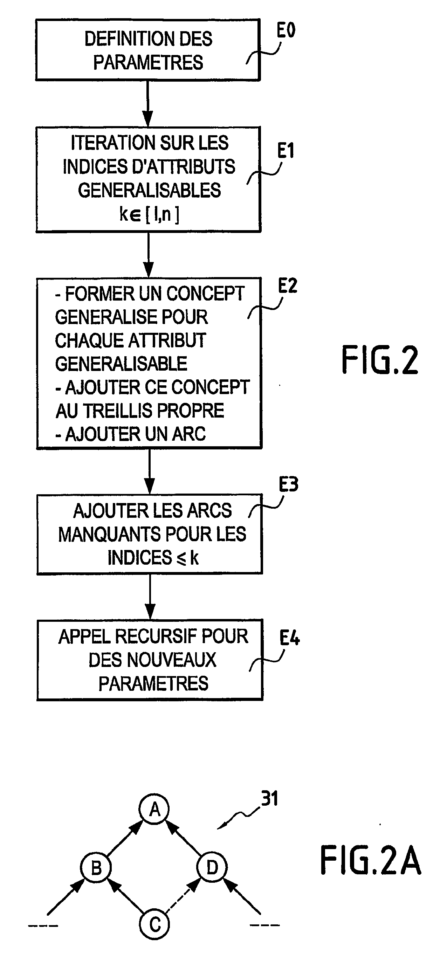

En effet, les figures 2 à 4, montrent des organigrammes illustrant la formation du treillis propre à un individu donné, la fusion d'un treillis propre donné dans le treillis général, et la sélection des concepts pertinents et généraux.

L'organigramme de la figure 2 montre la formation d'un treillis propre à un individu donné. Plus particulièrement, il montre la construction d'un treillis propre $Ti = (Ci,Ri)$ en cours d'élaboration au voisinage d'un concept donné ou alerte donnée.

Ainsi, à l'étape E0, on définit le concept donné $c = (a_1,..., a_n)$ ainsi que l'indice $I$ correspondant à l'indice de l'attribut à partir duquel la généralisation est mise en oeuvre, sachant que les généralisations selon les attributs d'indices inférieurs sont considérées comme correspondant à des concepts qui ont déjà été ajoutés au treillis propre $Ti$ au cours d'appels récursifs antérieurs.

Les étapes E1 à E3 sont une boucle principale qui itère sur les indices d'attributs selon lesquels le noeud donné en paramètre, à l'étape E0, va être généralisé. L'itération est faite pour tous les indices $k$ entre $I$ et $n$ et pour tous les attributs $a_k$ généralisables.

Ainsi, pour tout attribut $a_k$ qui peut être généralisé à partir de sa structure hiérarchique, on calcule à l'étape E2 la fonction $genAtt(c,k)$ qui récupère la valeur de l'attribut qui généralise celui de $a_k$ pour former un concept $p$ correspondant à la généralisation du concept $c$ selon l'indice $k$.

Ce concept généralisé $p$ est ajouté au treillis $Ci = Ci \cup p$ et un arc est ajouté allant du concept $c$ vers le concept $p$, c'est-à-dire $Ri = Ri \cup \{(p,c)\}$.

L'étape E3 est une boucle interne qui ajoute les arcs manquants allant des noeuds parents du concept $c$, issus de la généralisation de $c$ selon tous les attributs d'indice inférieur ou égal à $k$, c'est-à-dire $Ri = Ri \cup \{(\uparrow^{Ak}\uparrow^{Ah}(c),p)\}$.

L'étape E4 est un appel récursif où l'organigramme est appliqué pour des nouveaux paramètres.

Ainsi, l'algorithme de la formation d'un treillis propre pour un concept donné c peut être décrit comme ci-dessous:

*Algorithme :Treillis propre*

**Données** *: Le concept* $c = (a_1,...,a_n)$*,*

*l'indice l de l'attribut à partir duquel généraliser,*

*le treillis* $Ti = (Ci, Ri)$ *en cours d'élaboration.*

**pour** $k \in [l; n]$ **faire**

**si** $a_k$ *est généralisable,* **alors**

$$p = genAtt(c, k)$$
$$Ci = Ci \bigcup p$$
$$Ri = Ri \bigcup \{(p,c)\}$$

**pour** $h \in [o, k]$ **faire**

$$Ri = Ri \bigcup \left\{ \left( \uparrow^{Ak} \uparrow^{Ah} (c), p \right) \right\}$$

**fin**

**fin**

*Treillis propre* $(p, k, Ti)$

**fin.**

Plus particulièrement, la figure 2A montre un exemple de la construction du treillis propre 31 à partir d'une alerte donnée correspondant à un noeud donné A selon le deuxième attribut du noeud A. Autrement dit, à partir des paramètres d'appel ($c = A, k = 1, Ti = Tc$).

D'une manière générale, pour tout attribut généralisable de l'alerte donnée, on récupère la valeur généralisée de cet attribut à partir de sa structure hiérarchique pour former une nouvelle alerte plus générale que l'alerte donnée.

Selon cet exemple, à l'étape k = 2 de l'algorithme, un nouveau noeud D correspondant à la nouvelle alerte formée selon la généralisation du deuxième attribut du noeud A, est ajouté au treillis propre ainsi qu'un arc (D, A) allant du nouveau noeud D de la nouvelle alerte au noeud A de l'alerte donnée.

Ensuite des arcs manquants allant des noeuds parents de l'alerte donnée A au noeud D de la nouvelle alerte sont ajoutés. Les noeuds parents de l'alerte donnée sont issus de la généralisation de l'alerte donnée selon ses autres attributs.

Selon cet exemple, à l'itération précédente *(k = 1)*, le treillis de sommet B a été construit. Les généralisations de *D* selon des attributs dont l'indice est inférieur à *k* ont déjà été ajoutées, en l'occurrence C, pour *k = 1*. Ainsi, seul l'arc manquant (C, *D*) est ajouté.

L'algorithme est ré-exécuté récursivement avec comme paramètres *(D,* 2, T).

D'une manière générale, le treillis propre à un individu i=($a_1,...,a_n$) est obtenu en appelant l'algorithme Treillis Propre (*c=i,k*=1,*Ti*=({*i*},{ })), sachant qu'au départ, le treillis propre associé au noeud *i* est formé d'un seul noeud et l'ensemble des arcs est encore vide.

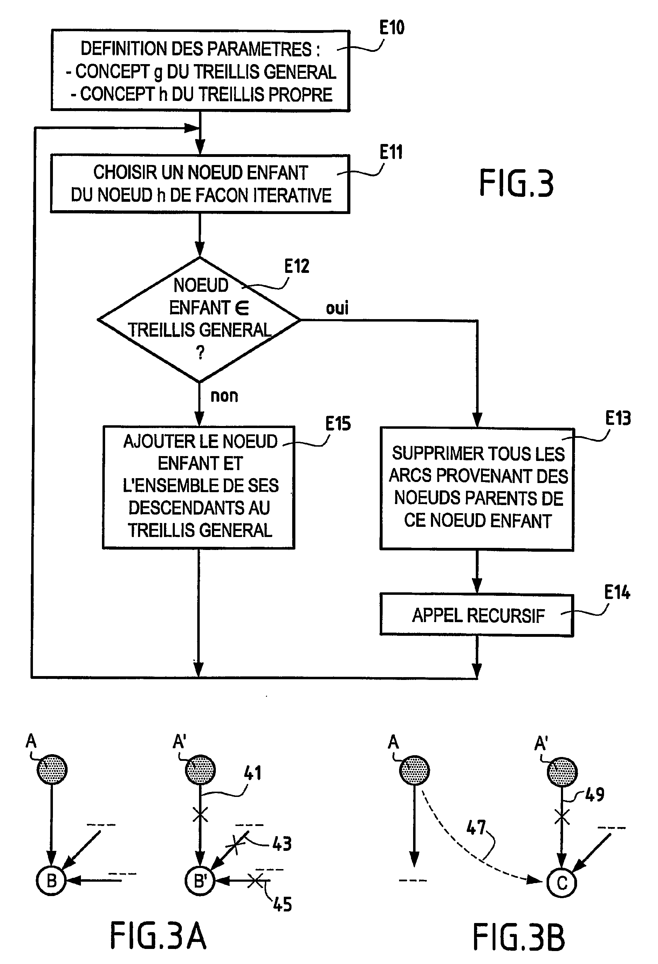

L'organigramme de la figure 3 montre la fusion d'un treillis propre donné dans le treillis général.

A l'étape E10, les paramètres d'initialisation sont définis. En particulier, il est sélectionné un premier noeud correspondant à une première alerte ou concept *h* appartenant au treillis propre *Ti* = (*Ci,Ri),* et un second noeud correspondant à une seconde alerte ou concept *g* appartenant au treillis général *T* = (*C,R*).

La boucle principale entre les étapes E11 et E14 ou E15, itère sur l'ensemble des noeuds enfants du noeud *h* du treillis propre passé en paramètre, c'est-à-dire pour $h_j \in \downarrow (h)$.

Ainsi, à l'étape E11 un noeud enfant $h_j$ du premier noeud *h* est choisi.

A l'étape E12, on vérifie si ce noeud enfant $h_j$ du premier noeud *h* appartient aussi au treillis général. Autrement dit, on vérifie si $\exists g_j \in \downarrow (g)$ tel que $g_j = h_j$.

Dans l'affirmative, tous les arcs provenant des noeuds parents de ce noeud enfant sont supprimés $Ri = Ri\text{-}\uparrow$ ($h_j$) à l'étape E13, avant de passer à l'étape E14.

En effet, la proposition suivante dit que si un noeud $h_j$ d'un treillis propre existe déjà dans le treillis général, alors l'ensemble de ses parents s'y trouve aussi, c'est-à-dire :

$$\left(h_j \in Ci \wedge \exists g_k \in C, h_j = g_k\right) \Rightarrow \uparrow (h) \subseteq C.$$

L'étape E15 est un appel récursif où l'organigramme est appliqué à nouveau à partir de l'étape E11 mais pour des nouveaux paramètres.

En effet, les enfants du noeud $h_j$ ne sont pas forcément dans le treillis général, il faut donc exécuter récursivement l'algorithme sur ce noeud $h_j$.

En revanche, si le noeud enfant n'appartient pas au treillis général, alors il suffit de l'y ajouter $T = T \cup Th_j$ ainsi que l'ensemble de ses descendants à l'étape E15 avant de revenir à l'étape E11.

La contraposée de la proposition précédente nous assure qu'il n'y aura pas de duplication de noeuds.

Ainsi, l'algorithme de la fusion d'un treillis propre au treillis général peut être décrit comme ci-dessous :

*Algorithme : Fusion Treillis*
    ***Données*** *: Un concept $g$ du treillis général $T = (C, R)$,*
               *un    concept $h$ du treillis propre $Ti = (Ci, Ri)$ de l'individu $i$*
      ***pour*** *chaque concept $h_j \in \downarrow (h)$* ***faire***
          ***si*** *$\exists g_j \in \downarrow (g)$ tel que $g_j = h_j$* ***alors***
              $Ri = Ri - \uparrow \left(h_j\right)$
              *Fusion Treillis $\left(g_j, h_j\right)$*
        ***fin***
        ***sinon***
              $Ri = Ri - \left\{\left(h, h_j\right)\right\}$
              $T = T \bigcup Th_j$
        ***fin***
      ***fin.***

Les figures 3A et 3B schématisent le mécanisme de fusion d'un treillis propre au treillis général, selon l'organigramme de la figure 3.

Dans ces deux figures 3A et 3B, la portion de treillis de gauche appartient au treillis général et celle de droite au treillis propre que l'on souhaite fusionner. Les noeuds grisés sont les paramètres d'appel de l'algorithme. Ils sont égaux, par hypothèse (A = A').

Selon la figure 3A, l'un des enfants $B'$ de A' est déjà présent dans A $(B' = B)$. Les liens 41, 43, et 45 vers les ancêtres immédiats de $B'$ sont supprimés car on sait qu'ils sont déjà dans le treillis général. L'algorithme est alors appelé récursivement sur $B$ et B'.

Selon la figure 3B, le noeud C n'existe pas en tant qu'enfant de A, alors un lien 47 (en pointillés) est créé entre A et C, et le lien 49 qui liait C à A' est supprimé. Le sous treillis ayant comme sommet C est donc intégré au treillis général.

L'algorithme est appelé avec comme arguments les sommets du treillis propre à l'individu à insérer et le sommet du treillis général. Comme tous les treillis ont un même sommet correspondant au noeud le plus général, l'hypothèse selon laquelle les concepts passés en arguments à l'algorithme sont égaux est respectée.

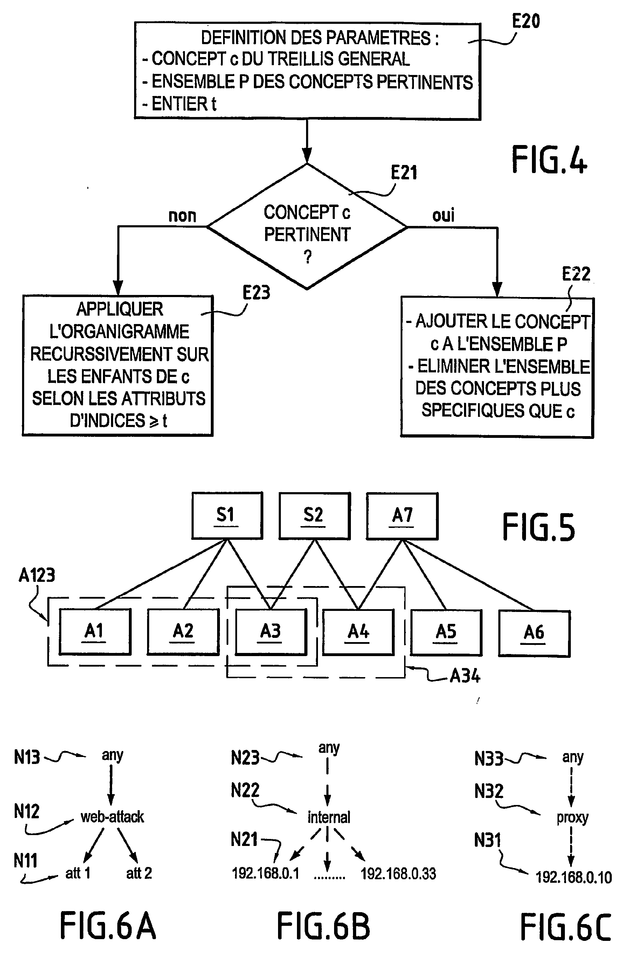

L'organigramme de la figure 4 montre l'identification des alertes ou concepts synthétiques fournissant un ensemble $P$ des alertes ou concepts qui sont à la fois les plus pertinents et les plus généraux d'une alerte ou d'un concept $c$.

Une alerte ou un concept $c$ est dit pertinent si chacun des ensembles $\downarrow^{Ai}(c)$ est « homogène » et « suffisamment grand ».

Un ensemble d'alertes ou de concepts est homogène si la dispersion du nombre d'individus couverts par chaque concept n'est pas trop grande. On utilise à cet effet, de façon connue un coefficient de variation.

Un ensemble $\downarrow^{Ai}(c)$ est suffisamment grand si le nombre d'éléments qui le compose est supérieur à une valeur seuil liée au niveau d'abstraction ou de généralisation de l'attribut $Ai$ de $c$.

Formellement :

$$p(c) \Leftrightarrow \forall Ai, \left( |Ai| > \tau_{c_{Ai}} \, et \, \frac{\sigma_{F_{Ai}}}{m_{F_{Ai}}} < 1 \right),$$

où la fonction $p(c)$ désigne une fonction booléenne indiquant si un noeud est pertinent; $F_{Ai}$ est l'ensemble formé des d'individus couverts par chaque concept de $\downarrow^{Ai}(c)$ ; $m_{F_{Ai}}$ est la moyenne de $F_{Ai}$; $\sigma_{F_{Ai}}$ sa variance; et $\tau_{c_{Ai}}$ représente la valeur de seuil liée au niveau d'abstraction du domaine d'attribut $Ai$ de $c$.

Le nombre d'individus couverts par un concept est une valeur liée à chaque noeud du treillis et mise à jour lors de la fusion d'un treillis propre associé à un individu avec le treillis général.

Ainsi, une alerte est dite pertinente si chacun des ensembles des noeuds enfants de l'alerte pertinente $c$ issus de la spécialisation de cette alerte $c$ selon chacun de ses domaines d'attributs est homogène, et si le nombre d'éléments composant chacun des ensembles des noeuds enfants de l'alerte pertinente $c$ est supérieur à une valeur seuil.

L'étape E20 de l'organigramme de la figure 4, correspond à la définition des paramètres d'appel. Ces paramètres comportent un concept $c$ du treillis général $T = (C,R)$, un ensemble $P$ des concepts pertinents précédemment trouvés, et un entier $t$ utilisé pour le parcours du treillis.

L'étape E21, est un test pour vérifier la pertinence de $c$. Ainsi si le concept $c$ est pertinent, alors on passe à l'étape E22, où le concept $c$ est ajouté à l'ensemble $P$ des concepts pertinents $P=P\cup\{c\}$, et l'ensemble des concepts plus spécifiques que $c$ éventuellement ajoutés précédemment sont éliminés de l'ensemble $P$, c'est-à-dire $P = P\text{-}\{c_i \in P/c_i \lhd c\}$. En effet, on cherche les concepts les plus abstraits, tout en étant pertinents.

En revanche, si $c$ n'est pas pertinent, alors l'algorithme est appliqué récursivement, à l'étapes E23 sur l'ensemble des enfants de $c$ issus de la spécialisation de $c$ selon les attributs d'indices $i$ supérieurs ou égaux à $t$, c'est-à-dire $c_i \in \downarrow^{Ai}(c)$, sachant que les autres attributs ont déjà été analysés.

Quand l'algorithme se termine, une liste comportant les concepts jugés pertinents et généraux est fournie à l'unité de sortie 23 du système de gestion d'alertes 13 afin qu'un opérateur de sécurité puisse avoir une vision globale de l'ensemble des alertes. Si ce dernier souhaite des détails sur un concept quelconque $c$ qu'il juge trop abstrait, alors l'algorithme est re-exécuté sur l'ensemble des enfants de ce concept $c$.

Ainsi, l'algorithme d'identification des concepts synthétiques peut être décrit comme ci-dessous :

*Algorithme : Synthétiques*

**Données :** *Un concept c du treillis général* $T = (C, R)$,

*un ensemble* $P$ *des concepts pertinents précédemment trouvés*

*un entier* $t$ utilisé pour le parcours du treillis

**si** $p(c)$ **alors**

$$P = P - \{c_i \in P / c_i \lhd c\}$$

$$P = P \cup \{c\}$$

**fin**

**sinon**

**pour** $l \in [t, n]$ **faire**

**pour** *chaque élément* $c_i \in \downarrow^{Ai}(c)$ **faire**

*Synthétiques*$(c_i, P, l)$

**fin**

**fin**

**fin**

On notera que les alertes synthétiques sont associées à des différents groupes d'alertes issus des sondes de sorte que ces groupes ne sont pas forcément mutuellement exclusifs.

En effet, la figure 5 montre de façon très schématique une alerte associée à différentes alertes synthétiques.

Les alertes A1 à A6 émises par les sondes de détection d'intrusions sont les feuilles du treillis général. Le groupe d'alertes associé à une alerte générale est l'ensemble des feuilles accessibles depuis cette alerte générale.

Ainsi, le groupe d'alerte A123 est associé à l'alerte synthétique S1 et le groupe d'alerte A34 est associé à l'alerte synthétique S2. En revanche, les alertes A4 à A6 sont associées à une alerte générale A7 qui n'est pas une alerte synthétique.

Etant donné la structure même du treillis, les groupes d'alertes ne sont pas mutuellement exclusifs. Ainsi, l'alerte A3 participe à deux phénomènes, c'est-à-dire à deux groupes d'alertes différents A123 et A34.

Les alertes issues de sondes de détection d'intrusions sont des individus définis par une pluralité d'attributs appartenant à une pluralité de domaines d'attributs. Les domaines d'attributs peuvent comporter un ensemble des identifiants d'alertes, un ensemble des sources d'attaques, un ensemble des cibles d'attaques, et un ensemble des dates d'attaques.

Les figures 6A à 7, montrent un exemple simplifié de classification d'un ensemble d'alertes issues de sondes de détection d'intrusions.

Selon cet exemple, les alertes sont des triplets *(nom,src,dst)*$\in N \times S \times D$, où *N* représente l'ensemble des identifiants d'alertes, *S* représente l'ensemble des sources d'attaques, et *D* représente l'ensemble des cibles d'attaques. Dans d'autres exemples, les alertes pourraient être constituées d'autres types d'attributs, ou bien les mêmes mais avec des domaines définis différemment.

Au niveau d'abstraction le plus bas, les identifiants d'alertes sont les identifiants de signatures de l'outil de détection d'intrusions Snort™. Le niveau d'abstraction supérieur est constitué des classes d'attaques définies par Snort™. Le niveau d'abstraction supérieur est constitué d'un seul élément, *«any».*

En effet, la figure 6A montre une hiérarchie simplifiée associée au domaine de l'ensemble des identifiants. Le premier niveau d'abstraction ou de généralisation N11 comporte les éléments « att1 » et « att2 ». Les deuxième et troisième niveaux de généralisation N12, N13 comportent les éléments « web-attack » et « any » respectivement.

Au niveau d'abstraction le plus bas, les sources d'attaques sont des adresses du type IPv4. Le niveau d'abstraction supérieur est constitué des noms de domaines de réseau gérés par l'organisme IANA™ et ses branches locales (RIPE, APNIC, ARIN, etc.). Les adresses IP non enregistrées dans la base IANA™ ou les adresses publiques internes au système d'information surveillé ou les adresses IP privées, sont abstraites en notation du type CIDR (par exemple 192.168.0.0/24). Le niveau supérieur peut être constitué de deux éléments, « external » et « internal » pour désigner l'extérieur et l'intérieur du système d'information. Le niveau d'abstraction suivant est constitué d'un seul élément, « any ».

L'exemple de la figure 6B montre une hiérarchie simplifiée associée au domaine de l'ensemble de sources d'attaques. Le premier niveau d'abstraction ou de généralisation comportant les éléments « 192.168.0.1 » et « 192.168.0.33 ». Les deuxième et troisième niveaux de généralisation comportent les éléments « internal » et « any » respectivement.

Au niveau d'abstraction le plus bas, les cibles d'attaques sont les adresses IP publiques et privées du système d'information. Le niveau d'abstraction suivant est constitué des adresses de réseau en notation CIDR. Le niveau d'abstraction suivant est constitué d'un seul élément, «any».

La figure 6C montre une hiérarchie simplifiée associée au domaine de l'ensemble de cibles d'attaques. Les premier, deuxième et troisième niveaux d'abstraction ou de généralisation comportent les éléments « 192.168.0.10 », « proxy », et « any » respectivement.

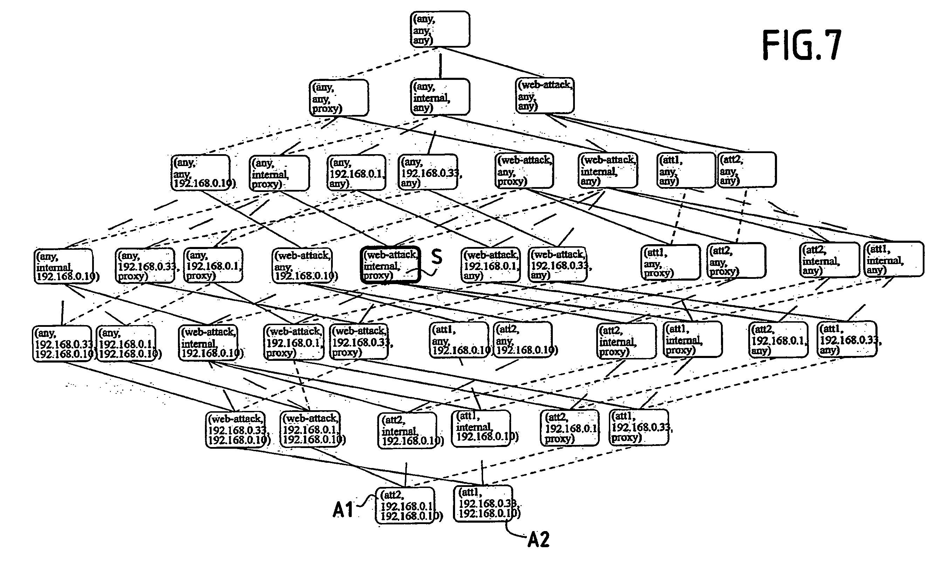

La figure 7 illustre un treillis général associé à deux alertes A1 et A2 définis par A1(att2, 192.168.0.1, 192.168.0.10) et A2(att1, 192.168.0.33, 192.168.0.10).

Selon cet exemple et d'après les hiérarchies d'attributs des figures 6A à 6C, les identifiants d'attaque sont généralisés en classe d'attaque « web-attack », puis en « any ».

Les adresses IP des attaquants sont généralisées en « internal » puis en « any ».

Les adresses IP des victimes sont généralisées en fonction d'hôte « proxy », puis en « any ».

Selon cet exemple, il y a deux attaquants distincts 192.168.0.1 de l'alerte A1 et 192.168.0.33 de l'alerte A2 qui sont des adresses IP internes. Il y a une seule victime 192.168.0.10, qui est un proxy web.

L'alerte la plus abstraite inférée par le système est (any, any, any). Les flèches pleines dénotent une généralisation selon l'attribut qui correspond à l'attaque, les flèches en tirets dénotent une généralisation selon l'attribut qui correspond à l'attaquant, et les flèches en pointillés dénotent une généralisation selon l'attribut qui correspond à la victime.

A l'issue du processus de sélection des alertes pertinentes, le système propose l'alerte synthétique (web-attack, internal, proxy). Les autres alertes sont soit trop générales, soit trop spécifiques.

**Revendications**

**1.** Procédé de classification automatique d'un ensemble d'alertes issues de sondes de détection d'intrusions (11a, 11b, 11c) d'un système de sécurité d'information (1) pour produire des alertes synthétiques, chaque alerte étant définie par une pluralité d'attributs qualitatifs ($a_1$,...,$a_n$) appartenant à une pluralité de domaines d'attributs ($A1$,..., $An$) dont chacun est muni d'une relation d'ordre partiel, **caractérisé en ce qu'**il comporte les étapes suivantes :

- organiser les attributs appartenant à chaque domaine d'attribut en une structure hiérarchique comportant plusieurs niveaux définis selon la relation d'ordre partiel du domaine d'attribut, la pluralité de domaines d'attributs formant ainsi plusieurs structures hiérarchiques ;
- construire pour chaque alerte issue des sondes de détection d'intrusions (11a, 11b, 11c), un treillis propre à cette alerte en généralisant chaque alerte selon chacun de ses attributs et à tous les niveaux de la structure hiérarchique, le treillis propre comportant des noeuds, correspondant à des alertes, liés entre eux par des arcs de sorte que chaque noeud est lié à un ou des noeuds parents et/ou un ou des noeuds enfants ou descendants ;
- fusionner de façon itérative dans un treillis général, chacun des treillis propres ;
- identifier dans le treillis général, les alertes synthétiques en sélectionnant les alertes qui sont à la fois les plus pertinentes et les plus générales selon des critères statistiques et selon l'appartenance de leurs attributs à des niveaux inférieurs des structures hiérarchiques; et
- produire les alertes synthétiques à une unité de sortie (23) d'un système de gestion d'alertes (13) afin de présenter une vision globale de l'ensemble des alertes issues des sondes de détection d'intrusions (11a, 11b, 11c).

**2.** Procédé selon la revendication 1, **caractérisé en ce que** la construction d'un treillis propre comporte les étapes suivantes :

- récupérer pour tout attribut généralisable d'une alerte donnée, la valeur généralisée de cet attribut à partir de sa structure hiérarchique pour former une nouvelle alerte plus générale que ladite alerte donnée ;
- ajouter un nouveau noeud au treillis propre correspondant à la nouvelle alerte et ajouter un arc allant du nouveau noeud de la nouvelle alerte au noeud de l'alerte donnée ;
- ajouter des arcs manquants allant des noeuds parents de l'alerte donnée, issus de la généralisation de l'alerte donnée selon ses autres attributs, au noeud de la nouvelle alerte.

3. Procédé selon l'une quelconque des revendications 1 et 2, **caractérisé en ce que** la fusion d'un treillis propre donné dans le treillis général comporte les étapes suivantes :

- sélectionner un premier noeud correspondant à une première alerte appartenant au treillis propre donné, et un second noeud correspondant à une seconde alerte appartenant au treillis général ;
- supprimer tous les arcs provenant des noeuds parents d'un noeud enfant du premier noeud si ledit noeud enfant appartient aussi au treillis général,
- ajouter au treillis général ledit noeud enfant et l'ensemble de ses descendants si ledit noeud enfant n'appartient pas au treillis général.

4. Procédé selon l'une quelconque des revendications 1 à 3, **caractérisé en ce que** une alerte pertinente est identifiée lorsque chacun des ensembles des noeuds enfants de l'alerte pertinente issus d'une spécialisation de cette alerte selon chacun de ses domaines d'attributs est homogène, et lorsque le nombre d'éléments composant ledit chacun des ensembles des noeuds enfants de l'alerte pertinente est supérieur à une valeur seuil.

5. Procédé selon l'une quelconque des revendications 1 à 4, **caractérisé en ce que** les alertes synthétiques sont associées à des différents groupes d'alertes issus des sondes de sorte que ces groupes ne sont pas mutuellement exclusifs.

6. Procédé selon l'une quelconque des revendications 1 à 5, **caractérisé en ce que** la pluralité des domaines d'attributs comporte des domaines parmi les ensembles suivants : ensemble des identifiants d'alertes, ensemble des sources d'attaques, ensemble des cibles d'attaques, et ensemble des dates d'attaques.

7. Programme informatique **caractérisé en ce qu'**il est conçu pour mettre en oeuvre le procédé selon l'une quelconque des revendications 1 à 6 lorsqu'il est exécuté par le système de gestion d'alertes (13).

8. Système de gestion d'alerte (13) pour une classification automatique d'un ensemble d'alertes issues de sondes de détection d'intrusions (11a, 11b, 11c) produisant des alertes synthétiques, chaque alerte étant définie par une pluralité d'attributs qualitatifs ($a_1$,...,$a_n$) appartenant à une pluralité de domaines d'attributs ($A1$,...,$An$) dont chacun est muni d'une relation d'ordre partiel, **caractérisé en ce qu'**il comporte :

- des moyens de traitement pour organiser les attributs appartenant à chaque domaine d'attribut en une structure hiérarchique comportant plusieurs niveaux définis selon la relation d'ordre partiel du domaine d'attribut, la pluralité de domaines d'attributs formant ainsi plusieurs structures hiérarchiques ;
- des moyens de traitement pour construire pour chaque alerte issue des sondes de détection d'intrusions (11a, 11b, 11c), un treillis propre à cette alerte en généralisant chaque alerte selon chacun de ses attributs et à tous les niveaux de la structure hiérarchique, le treillis propre comportant des noeuds, correspondant à des alertes, liés entre eux par des arcs de sorte que chaque noeud est lié à un ou des noeuds parents et/ou un ou des noeuds enfants ou descendants ;
- des moyens de traitement pour fusionner de façon itérative dans un treillis général, chacun des treillis propres ;
- des moyens de traitement pour identifier dans le treillis général, les alertes synthétiques en sélectionnant les alertes qui sont à la fois les plus pertinentes et les plus générales selon des critères statistiques et selon l'appartenance de leurs attributs à des niveaux inférieurs des structures hiérarchiques; et
- des moyens de traitement pour produire les alertes synthétiques à une unité de sortie (23) afin de présenter une vision globale de l'ensemble des alertes issues des sondes de détection d'intrusions (11a, 11b, 11c).

9. Système de sécurité d'information (1) comprenant des sondes de détection d'intrusions et un système de gestion d'alerte (13) selon la revendication 8.

**Claims**

1. Method of automatically classifying a set of alerts obtained from intrusion detection probes (11a, 11b, 11c) of an information security system (1) for producing summary alerts, each alert being defined by a plurality of qualitative attributes ($a_1$,..., $a_n$) affiliated to a plurality of attribute domains ($A_1$, ..., $A_n$), each of which is provided with a partial order relation, **characterized in that** it comprises the following steps:

- organizing the attributes affiliated to each attribute domain into a hierarchical structure comprising a number of levels defined according to the partial order relation of the attribute domain, the plurality of attribute domains thus forming a number of hierarchical structures;

- constructing for each alert obtained from the intrusion detection probes (11a, 11b, 11c) a trellis specific to this alert by generalizing each alert according to each of its attributes and to all the levels of the hierarchical structure, the specific trellis comprising nodes, corresponding to alerts, interlinked by arcs such that each node is linked to one or more parent nodes and/or one or more child or descendent nodes;

- iteratively merging each of the specific trellises into a general trellis;

- identifying in the general trellis, the summary alerts by selecting the alerts that are both the most relevant and the most general according to statistical criteria and according to the affiliation of their attributes to lower levels of the hierarchical structures; and

- producing summary alerts to an output unit (23) of an alert management system (13) in order to present an overview of all the alerts obtained from the intrusion detection probes (11a, 11b, 11c).

2. Method according to Claim 1, **characterized in that** the construction of a specific trellis comprises the following steps:

- recovering for any generalizable attribute of a given alert, the generalized value of this attribute from its hierarchical structure to form a new alert that is more general than said given alert;

- adding a new node to the specific trellis corresponding to the new alert and adding an arc going from the new node of the new alert to the node of the given alert;

- adding missing arcs going from the parent nodes of the given alert, derived from the generalization of the given alert according to its other attributes, to the node of the new alert.

3. Method according to any one of Claims 1 and 2, **characterized in that** the merging of a given specific trellis into the general trellis comprises the following steps:

- selecting a first node corresponding to a first alert affiliated to the given specific trellis, and a second node corresponding to a second alert affiliated to the general trellis;

- deleting all the arcs originating from the parent nodes of a child node of the first node if said child node is also affiliated to the general trellis,

- adding to the general trellis said child node and all of its descendents if said child node is not affiliated to the general trellis.

4. Method according to any one of Claims 1 to 3, **characterized in that** a relevant alert is identified when each of the sets of the child nodes of the relevant alert obtained from a specialization of this alert according to each of its attribute domains is uniform, and when the number of elements forming said each of the sets of the child nodes of the relevant alert is greater than a threshold value.

5. Method according to any one of Claims 1 to 4, **characterized in that** the summary alerts are associated with different alert groups obtained from the probes such that these groups are not mutually exclusive.

6. Method according to any one of Claims 1 to 5, **characterized in that** the plurality of attribute domains comprises domains from the following sets: set of alert identifiers, set of attack sources, set of attack targets, and set of attack dates.

7. Computer program **characterized in that** it is designed to implement the method according to any one of Claims 1 to 6 when it is executed by the alert management system (13).

8. Alert management system (13) for automatically classifying a set of alerts obtained from intrusion detection probes (11a, 11b, 11c) producing summary alerts, each alert being defined by a plurality of qualitative attributes ($a_1$, ..., $a_n$) affiliated to a plurality of attribute domains ($A_1$, ..., $A_n$), each of which is provided with a partial order relation, **characterized in that** it comprises:

- processing means for organizing the attributes affiliated to each attribute domain into a hierarchical structure comprising a number of levels defined according to the partial order relation of the attribute domain, the plurality of attribute domains thus forming a number of hierarchical structures;

- processing means for constructing, for each alert obtained from the intrusion detection probes (11a, 11b, 11c), a trellis specific to this alert by generalizing each alert according to each of its attributes and to all the levels of the hierarchical structure, the specific trellis comprising nodes, corresponding to alerts, interlinked by arcs such that each node is linked to one or more parent nodes and/or one or more child or descendent nodes;
- processing means for iteratively merging into a general trellis each of the specific trellises;
- processing means for identifying in the general trellis the summary alerts by selecting the alerts that are both the most relevant and the most general according to statistical criteria and according to the affiliation of their attributes to lower levels of the hierarchical structures; and
- processing means for producing summary alerts to an output unit (23) in order to present an overview of the set of alerts obtained from the intrusion detection probes (11a, 11b, 11c).

9. Information security system (1) comprising intrusion detection probes and an alert management system (13) according to Claim 8.

**Patentansprüche**

1. Verfahren zur automatischen Klassifizierung einer Gruppe von Alarmanzeigen, die von Intrusion-Detection-Sonden (11a, 11b, 11c) eines Informationssicherheitssystems (1) stammen, um synthetische Alarmanzeigen zu erzeugen, wobei jede Alarmanzeige durch mehrere qualitative Attribute ($a_1$, ..., $a_n$) definiert wird, die zu mehreren Attributdomänen ($A_1$, ..., $A_n$) gehören, von denen jede mit einer partiellen Ordnungsrelation versehen ist, **dadurch gekennzeichnet, dass** es die folgenden Schritte aufweist:

- Organisieren der zu jeder Attributdomäne gehörenden Attribute in einer hierarchischen Struktur, die mehrere Ebenen aufweist, die gemäß der partiellen Ordnungsrelation der Attributdomäne definiert sind, wobei die mehreren Attributdomänen so mehrere hierarchische Strukturen bilden;
- für jede von den Intrusion-Detection-Sonden (11a, 11b, 11c) stammende Alarmanzeige, Konstruieren eines dieser Alarmanzeige eigenen Gitters, indem jede Alarmanzeige gemäß jedem ihrer Attribute und auf allen Ebenen der hierarchischen Struktur verallgemeinert wird, wobei das Eigengitter Alarmanzeigen entsprechende Knoten aufweist, die miteinander derart durch Bögen verbunden sind, dass jeder Knoten mit einem oder mehreren Elternknoten und/oder mit einem oder mehreren Kind- oder Nachkommen-Knoten verbunden ist;
- iteratives Fusionieren jedes der Eigengitter in einem allgemeinen Gitter;
- Identifizieren der synthetischen Alarmanzeigen im allgemeinen Gitter, indem die Alarmanzeigen ausgewählt werden, die gemäß statistischen Kriterien und gemäß der Zugehörigkeit ihrer Attribute zu unteren Ebenen der hierarchischen Strukturen sowohl die relevantesten als auch die allgemeinsten sind; und
- Erzeugen der synthetischen Alarmanzeigen an einer Ausgangseinheit (23) eines Alarmanzeigen-Verwaltungssystems (13), um eine globale Sicht der Gesamtheit der von den Intrusion-Detection-Sonden (11a, 11b, 11c) stammenden Alarmanzeigen zu präsentieren.

2. Verfahren nach Anspruch 1, **dadurch gekennzeichnet, dass** die Konstruktion eines Eigengitters die folgenden Schritte aufweist:

- für jedes verallgemeinerbare Attribut einer gegebenen Alarmanzeige Wiedergewinnen des verallgemeinerten Werts dieses Attributs ausgehend von seiner hierarchischen Struktur, um eine neue Alarmanzeige zu bilden, die allgemeiner ist als die gegebene Alarmanzeige;
- Hinzufügen eines neuen Knotens zum Eigengitter entsprechend der neuen Alarmanzeige und Hinzufügen eines Bogens, der von dem neuen Knoten der neuen Alarmanzeige zum Knoten der gegebenen Alarmanzeige geht;
- Hinzufügen von fehlenden Bögen, die von den Elternknoten der gegebenen Alarmanzeige, die von der Verallgemeinerung der gegebenen Alarmanzeige gemäß ihren anderen Attributen stammen, zum Knoten der neuen Alarmanzeige gehen.

3. Verfahren nach einem der Ansprüche 1 und 2, **dadurch gekennzeichnet, dass** die Fusion eines gegebenen Eigengitters im allgemeinen Gitter die folgenden Schritte aufweist:

- Wählen eines ersten Knotens, der einer ersten Alarmanzeige entspricht, die zum gegebenen Eigengitter gehört, und eines zweiten Knotens, der einer zweiten Alarmanzeige entspricht, die zum allgemeinen Gitter gehört;
- Löschen aller Bögen, die von den Elternknoten eines Kindknotens des ersten Knotens kommen, wenn der Kindknoten auch zum allgemeinen Gitter gehört;
- Hinzufügen des Kindknotens und der Gesamtheit seiner Nachkommen zum allgemeinen Gitter, wenn der Kindknoten nicht zum allgemeinen Gitter gehört.

4. Verfahren nach einem der Ansprüche 1 bis 3, **dadurch gekennzeichnet, dass** eine relevante Alarmanzeige identifiziert wird, wenn jede der Gruppen von Kindknoten der relevanten Alarmanzeige, die von einer Spezialisierung dieser Alarmanzeige gemäß jeder ihrer Attributdomänen stammen, homogen ist, und wenn die Anzahl von Elementen, die jede der Gruppen der Kindknoten der relevanten Alarmanzeige bilden, über einem Schwellwert liegt.

5. Verfahren nach einem der Ansprüche 1 bis 4, **dadurch gekennzeichnet, dass** die synthetischen Alarmanzeigen verschiedenen Gruppen von Alarmanzeigen zugeordnet sind, die von den Sonden stammen, so dass diese Gruppen sich nicht gegenseitig ausschließen.

6. Verfahren nach einem der Ansprüche 1 bis 5, **dadurch gekennzeichnet, dass** die Vielzahl der Attributdomänen Domänen unter den folgenden Gruppen aufweist: Gruppe der Alarmanzeige-Kennungen, Gruppe der Angriffsquellen, Gruppe der Angriffsziele, und Gruppe der Angriffsdaten.

7. Computerprogramm, **dadurch gekennzeichnet, dass** es konzipiert ist, um das Verfahren nach einem der Ansprüche 1 bis 6 anzuwenden, wenn es vom Alarmanzeigen-Verwaltungssystem (13) ausgeführt wird.

8. Alarmanzeigen-Verwaltungssystem (13) für eine automatische Klassifizierung einer Gruppe von Alarmanzeigen, die von Intrusion-Detection-Sonden (11a, 11b, 11c) stammen, die synthetische Alarmanzeigen erzeugen, wobei jede Alarmanzeige durch mehrere qualitative Attribute ($a_1$, ..., $a_n$) definiert wird, die zu mehreren Attributdomänen ($A_1$, ..., $A_n$) gehören, von denen jede mit einer partiellen Ordnungsrelation versehen ist, **dadurch gekennzeichnet, dass** es aufweist:

- Verarbeitungsmittel, um die Attribute, die zu jeder Attributdomäne gehören, in einer hierarchischen Struktur zu organisieren, die mehrere Ebenen aufweist, die gemäß der partiellen Ordnungsrelation der Attributdomäne definiert sind, wobei die mehreren Attributdomänen so mehrere hierarchische Strukturen bilden;
- Verarbeitungsmittel, um für jede von den Intrusion-Detection-Sonder (11a, 11b, 11c) stammende Alarmanzeige ein dieser Alarmanzeige eigenes Gitter zu konstruieren, indem jede Alarmanzeige gemäß jedem ihrer Attribute und auf allen Ebenen der hierarchischen Struktur verallgemeinert wird, wobei das Eigengitter Alarmanzeigen entsprechende Knoten aufweist, die miteinander derart durch Bögen verbunden sind, dass jeder Knoten mit einem oder mehreren Elternknoten und/oder mit einem oder mehreren Kind- oder Nachkommen-Knoten verbunden ist;
- Verarbeitungsmittel, um jedes der Eigengitter iterativ in einem allgemeinen Gitter zu fusionieren;
- Verarbeitungsmittel, um im allgemeinen Gitter die synthetischen Alarmanzeigen zu identifizieren, indem die Alarmanzeigen ausgewählt werden, die gemäß statistischen Kriterien und gemäß der Zugehörigkeit ihrer Attribute zu unteren Ebenen der hierarchischen Strukturen sowohl die relevantesten als auch die allgemeinsten sind; und
- Verarbeitungsmittel, um die synthetischen Alarmanzeigen an einer Ausgangseinheit (23) zu erzeugen, um eine globale Sicht der Gesamtheit der von den Intrusion-Detection-Sonden (11a, 11b, 11c) stammenden Alarmanzeigen zu präsentieren.

9. Informationssicherheitssystem (1), dass Intrusion-Detection-Sonden und ein Alarmanzeigen-Verwaltungssystem (13) nach Anspruch 8 aufweist.

FIG.1

EP 1 695 485 B1

DEFINITION DES
PARAMETRES

E0

↓

ITERATION SUR LES
INDICES D'ATTRIBUTS
GENERALISABLES
$k \in [ l, n ]$

E1

↓

- FORMER UN CONCEPT
GENERALISE POUR
CHAQUE ATTRIBUT
GENERALISABLE
- AJOUTER CE CONCEPT
AU TREILLIS PROPRE
- AJOUTER UN ARC

E2

FIG.2

↓

AJOUTER LES ARCS
MANQUANTS POUR LES
INDICES $\leq k$

E3

↓

APPEL RECURSIF POUR
DES NOUVEAUX
PARAMETRES

E4

31

FIG.2A

E10
DEFINITION DES PARAMETRES :
- CONCEPT g DU TREILLIS GENERAL
- CONCEPT h DU TREILLIS PROPRE

FIG.3

E11
CHOISIR UN NOEUD ENFANT
DU NOEUD h DE FACON ITERATIVE

E12
NOEUD
ENFANT ∈
TREILLIS GENERAL
?

oui

non

E15
AJOUTER LE NOEUD
ENFANT ET
L'ENSEMBLE DE SES
DESCENDANTS AU
TREILLIS GENERAL

E13
SUPPRIMER TOUS LES
ARCS PROVENANT DES
NOEUDS PARENTS DE
CE NOEUD ENFANT

E14
APPEL RECURSIF

A

A'
41

B

B'
43
45

FIG.3A

A

A'
49

47

C

FIG.3B

EP 1 695 485 B1

**DEFINITION DES PARAMETRES :**
- CONCEPT c DU TREILLIS GENERAL
- ENSEMBLE P DES CONCEPTS PERTINENTS
- ENTIER t

E20

## FIG.4

CONCEPT c PERTINENT ? — E21

non

oui

APPLIQUER L'ORGANIGRAMME RECURSSIVEMENT SUR LES ENFANTS DE c SELON LES ATTRIBUTS D'INDICES ≥ t — E23

- AJOUTER LE CONCEPT c A L'ENSEMBLE P
- ELIMINER L'ENSEMBLE DES CONCEPTS PLUS SPECIFIQUES QUE c — E22

## FIG.5

S1  S2  A7

A123

A1  A2  A3  A4  A5  A6

A34

N13 → any
N12 → web-attack
N11 → att 1     att 2

FIG.6A

N23 → any
N22 → internal
N21 → 192.168.0.1 ......... 192.168.0.33

FIG.6B

N33 → any
N32 → proxy
N31 → 192.168.0.10

FIG.6C

19

## FIG.7